# EUROPEAN PATENT APPLICATION

(11) **EP 2 551 413 A1**
(43) Date of publication of application: **30.01.2013**
(21) Application number: 12178166.0
(22) Date of filing: 27.07.2012
(51) Int. Cl.: E03C 1/04, F16K 11/00, F16K 27/00, G05D 23/13

(54) **Thermostatic valve**

(30) Priority: 28.07.2011 ES 201130822 U
(71) Applicant: Caspro, S.A., 08759 Vallirana - Barcelona (ES)
(72) Inventor: Tres Casas, Daniel, 08759 Vallirana (Barcelona) (ES)
(74) Representative: Ungria López, Javier

(57) **Abstract**

Thermostatic valve of the type that comprises a main hollow cast body (1), having two water inlets (3, 4) and at least one water outlet (2), wherein the main body (1) is provided with at least one housing in which is located a thermostatic and/or bypass cartridge (71, 71'), and being the main hollow body (1) provided with internal walls that define water ducts from each one of the water inlets (3,4) to said cartridge (71, 71'), and from the cartridge (71, 71') to the aforementioned outlet (2). The valve comprises a distribution part (6) housed inside the hollow body (1), located at the exit of said cartridge (71, 71'), said part (6) comprising at least one through hole (63) for conducting the water flowing from the cartridge (71, 71').

## Description

### OBJET OF THE INVENTION

The present invention refers to a thermostatic valve. In particular, it refers to a thermostatic valve of the type that is used for taps and showers.

### BACKGROUND OF THE INVENTION

These valves are composed of a hollow main cast body, usually with an elongated shape, having two water inlets (hot and cold) and at least one water outlet (usually one or two corresponding to shower and tap). The main body is provided with one or two housings located at the ends of the main body in which are housed one or two thermostatic and/or distribution cartridges, manageable by the user. The hollow main cast body presents internal walls that define water duct from each one of the inlets to the outlet, passing through the aforementioned cartridge or cartridges. The outlet from the last thermostatic or distribution cartridge, is directly connected to one of the water outlets.

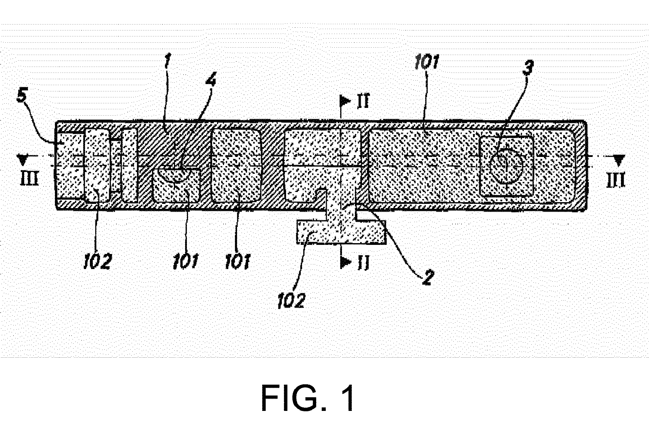

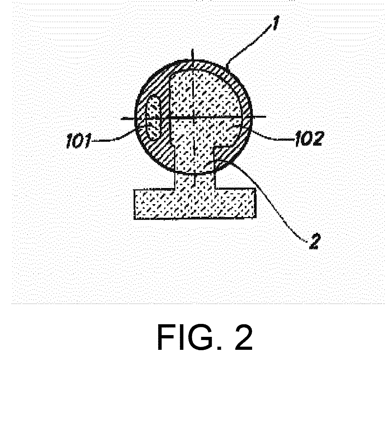

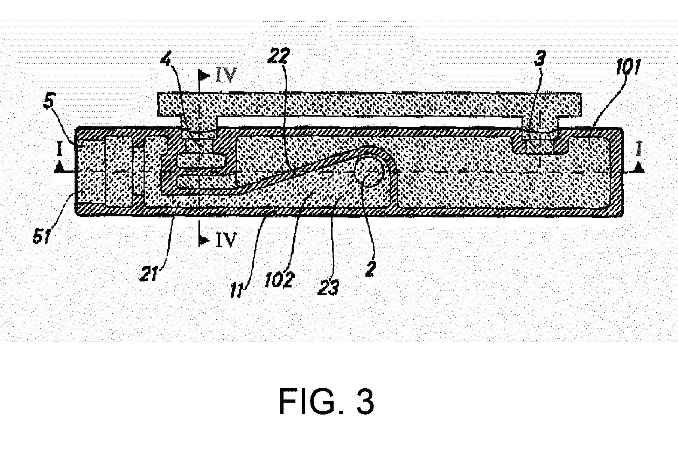

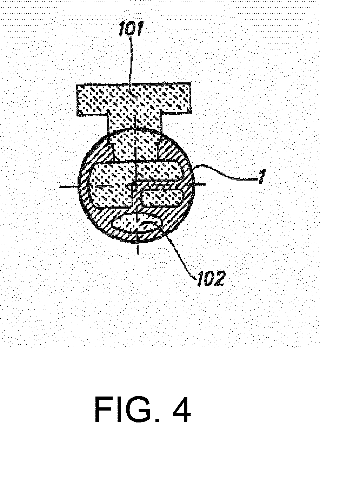

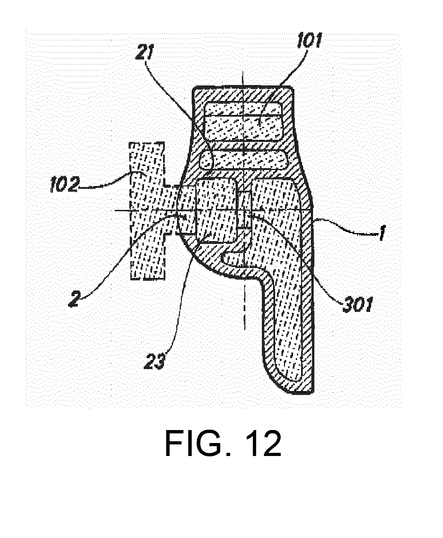

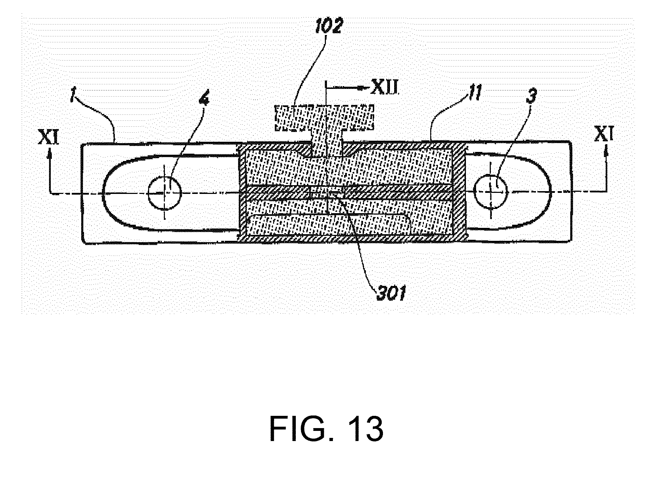

The manufacture of the main body is complicated. Due to the need of manufacturing a body closed with internal channels having curves and changes of direction, this is realized during the casting. However, even in this case, the casting of the piece is complicated and costly. Indeed, according to the current technique, two independent sand cores are necessary to define the internal walls and ducts inside the main body. Even in this way, subsequently it is necessary to mechanize holes on the inside of the main cast body and/or to mechanically cover holes necessary for the production process, which is an expensive task, since it involves carrying out operations in areas presenting a difficult access. Figures 1 to 4 and figures 11 to 13 show two examples of a main body, made by means of a casting process, according to the present invention.

### DESCRIPTION OF THE INVENTION

The object of the present invention is to disclose a thermostatic valve having a new structure that simplifies the manufacturing process, requiring one single sand core for making the sand body and not requiring any further subsequent machining of the cast main body.

To this end, the present invention makes use of a distribution part that is housed within the main body by means of a simple operation, through the housing of one of the cartridges, and exhibiting through holes that make part of the duct network inside the main body.

More particularly, the present invention relates to a thermostatic valve of the type that comprises a main hollow cast body having two water inlets and at least one water outlet, being the main body provided with at least one housing in which is located a thermostatic and/or by-pass cartridge, and being the main hollow body provided with internal walls that define water ducts from each one of the water inlets to said cartridge, and from the cartridge to said outlet. The valve comprises a distribution part housed inside the hollow body, located at the exit of said cartridge, said part comprising at least one through hole for conducting the water flowing from the cartridge.

Preferably, the body comprises an internal wall integrally cast, surrounding said water outlet or outlets, being said wall provided with at least one shoulder for supporting said distribution part.

More preferably, the inner face of the internal wall of the main cast body exhibits shoulders for supporting the distribution part.

An advantage of the present invention is that it is applicable to embodiments of a thermostatic valve having one single thermostatic cartridge and one single water outlet, as well as, to thermostatic valves having a distribution, centered thermostatic cartridge, and multiple water outlets.

According to an embodiment the valve comprises one single thermostatic cartridge and the distribution part comprises through holes for conducting cold water and hot water into the cartridge and the mixed water flowing from cartridge.

More preferably, the distribution part is located coincident with one of the water inlets.

According to another embodiment, the valve, comprises a distribution cartridge at one end of the main cast body and a thermostatic cartridge located at the opposite end of the main cast body, the internal walls of the main body defining a duct between the exit from the thermostatic cartridge and the distribution cartridge and wherein the distribution part is located at the exit of the distribution cartridge and comprises two ducts directed toward two respective water outlets from the main body.

### BRIEF DESCRIPTION OF THE FIGURES

For better comprehension purposes some drawings are enclosed, by way of illustration only and not by way of limitation, embodying a thermostatic valve, object of the present invention, together with other drawings from the prior art, so the invention will be better understood.
Figure 1 is a longitudinal cut view of a main cast body of a thermostatic valve according to the prior art, and of the two sand cores used for its manufacturing.
Figure 2 is a cross-sectional cut view of the main body and its manufacturing cores, according to the prior art, along the cutting plane II-II pointed out in figure 1.
Figure 3 is a longitudinal cut view of the main body and its manufacturing cores according to the prior art, along the cutting plane III pointed out in figure 1. In this figure, the cutting plane I-I corresponding to figure 1, is indicated.
Figure 4 is a cross-sectional cut view of the main body and its manufacturing cores according to the prior art, along the cutting plane IV-IV, indicated in figure 3.
Figure 5 is a longitudinal cut view of a main cast body and its one single manufacturing core of a first embodiment of a thermostatic valve, according to the present invention.
Figure 6 is a cross-sectional cut view of the main body and the core, along the plane VI-VI of figure 5.
Figure 7 is a longitudinal cut view of a first embodiment of a thermostatic valve, according to the present invention, which uses the main body of figures 5 and 6 wherein the path followed by the hot water from the inlet to the cartridge has been marked.
Figure 8 corresponds to figure 7 wherein the path followed by the cold water from the inlet to the thermostatic cartridge has been marked.
Figure 9 corresponds to figure 8, wherein the path followed by the water mixed in the thermostatic cartridge up to its exit from the main body of the valve, has been marked.
Figure 10 is a cross-sectional cut view of the embodiment of the valve, according to the present invention, as shown in figures 7 a 9.
Figure 11 shows again, a second embodiment of the main body for a thermostatic valve, according to the prior art, as well as the arrangement of its two manufacturing cores. This construction presents two water outlets and two mixing and distribution cartridges.
Figure 12 is a cross-sectional cut along the plane XII-XII of figure 11.
Figure 13 is a partial longitudinal cut along the plane XIII-XIII of figure 11.
Figure 14 is a longitudinal cut of a second embodiment of a thermostatic valve, according to the present invention. This embodiment includes a double water outlet, a thermostatic cartridge and a distribution cartridge.

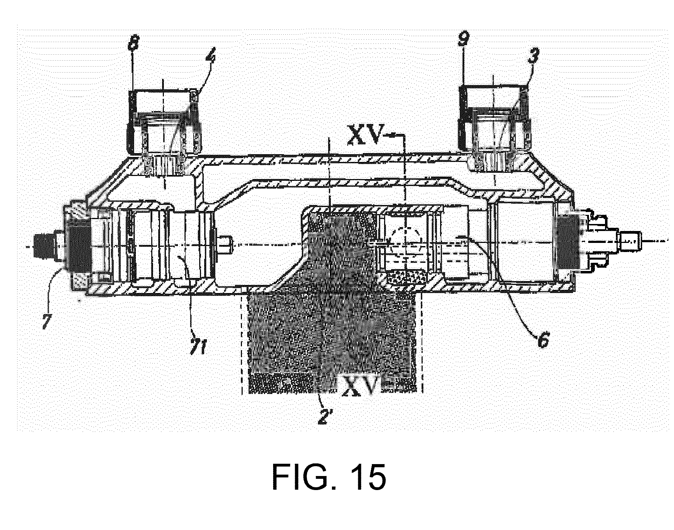

Figure 15 corresponds to figure 14, wherein the paths followed by the water when exiting the distribution part, have already been marked.

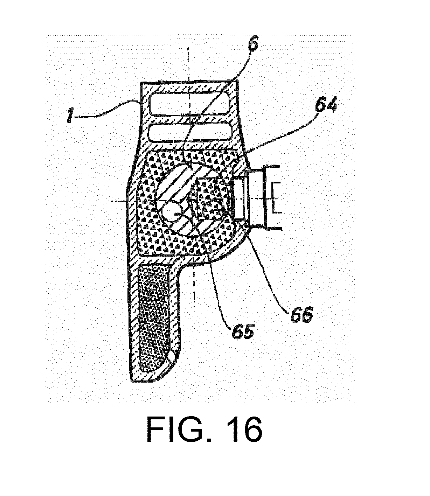

Figure 16 corresponds to a cross-sectional cut of the second embodiment of the valve, according to the present invention, as shown in figures 14 and 15, wherein the mechanized holes are applied in the distribution part.
Figure 17 shows a plan view of a longitudinal cut, of an embodiment of the thermostatic valve, in which an exit part has been placed.
Figure 18 is an elevation view of a longitudinal cut of an embodiment of the thermostatic valve, in which an outlet piece is placed.

Next, a list with the different elements represented in the figures that integrate the invention is provided, where:
1 = Main body
2 = Outlet
2'= Outlet
3 = Cold water inlet
4 = Hot water inlet
5 = Housing
6 = Distribution part
7 = Control
7'= Control
8 = Fitting socket
9 = Fitting socket
10 = Exit part
11 = Internal wall
20 = Housing
21 = Passage
22 = Internal wall
23 = Space
29 = Tray
51 = Opening
52 = Housing
61 = Hot water duct
62 = Cold water duct
63 = Mixed water duct
64 = Through-hole
65 = Through-hole
66 = Through-hole
69 = Fastener
71 = Thermostatic cartridge
71'= Cartridge
101 = Sand core
102 = Sand core
103 = Core
201 = Face
221 = Shoulder
222 = Shoulder
223 = Shoulder
224 = Shoulder
225 = Shoulder
301 = Opening

### DESCRIPTION OF AN EXEMPLARY EMBODIMENT OF THE INVENTION

Figures 1 to 4, show a main body -1- made using a casting process, for a thermostatic valve, according to the prior art. The main body corresponds to a thermostatic valve having a thermostatic cartridge and one single outlet -2- of mixed water, according to the prior art. In figures 1 to 4 in addition, the two sand cores -101- and -102- necessary for its manufacture, are exhibited.

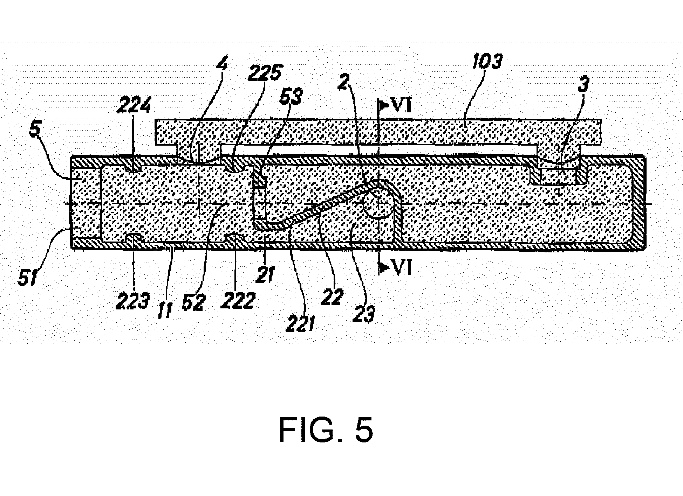

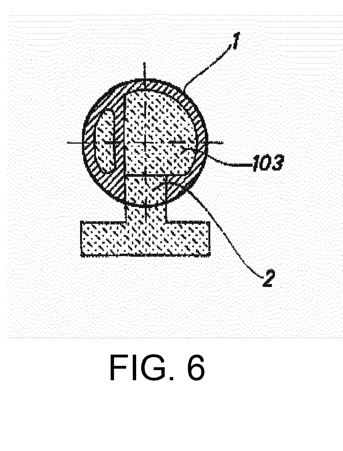

Figures 5 and 6 show a main body -1-, made using a casting process, for a thermostatic valve according to the present invention. The embodiment, according to the present invention shown in figures 5 and 6, is equivalent to the one of the prior art, shown in figures 1 to 4. The main body corresponds to a thermostatic valve with one single outlet -2- of mixed water and a single cartridge of the thermostatic-type. That is why the elements that are identical or similar to those of figures 1 to 4 have been noted with identical numerals.

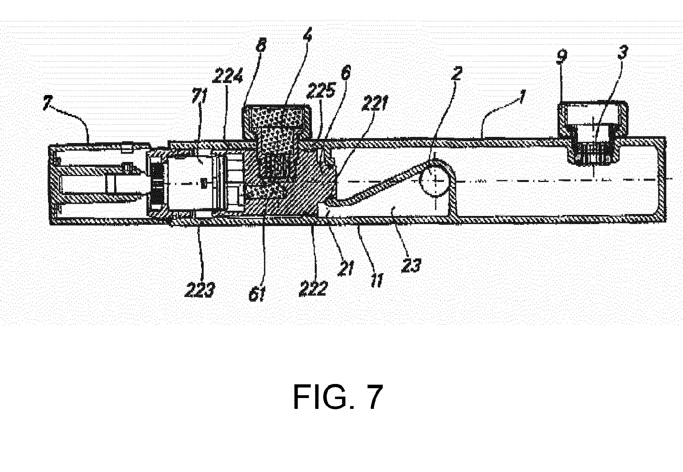

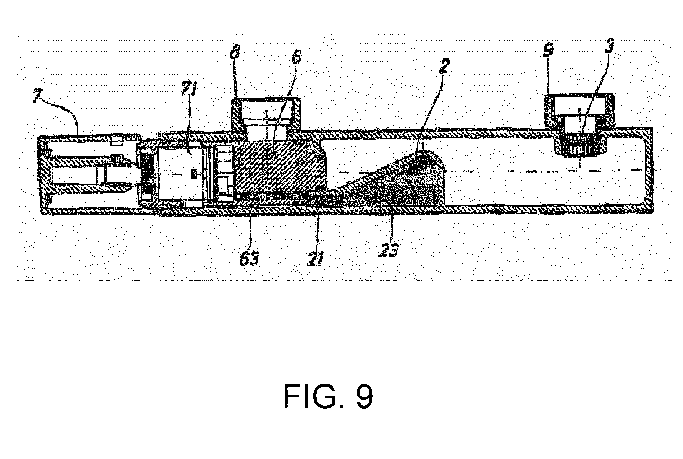

Figures 7 to 10 show a thermostatic valve according to the present invention, which employs the main body of figures 5 and 6.

In the embodiment of figures 1 to 4 a main body, according to the prior art made using a casting process, is shown. The elements that are identical or similar to those of the present invention have been noted with identical numerals for a better comprehension of the present invention and its advantages.

As it can be observed, the example of the prior art shown in figures 1 to 4 consists of a main body -1-, made using a casting process. The main body -1-presents a general cylindrical shape. The body presents two water inlets -3-, -4-for cold and hot water, respectively, and an outlet -2- for mixed water located on the lateral wall -11- of the cylinder. At one of the ends, one of the minor bases of the cylinder remains open, presenting an opening -51-, which leads to a space for housing a thermostatic cartridge (not shown in the figures).

Internally, the body -1- presents different walls that form the ducts through which the water travels from each one of the inlets to the thermostatic cartridge, where the mix takes place, and from the exit of the cartridge to the mixed water outlet -2-. In particular, and among other things, this embodiment, as shown, presents an internal wall -22-, which surrounds the water outlet -2-, defining a space -23- previous to the outlet -2- and an access passage -21-thereto, which connects to the space -5- reserved for the cartridge.

In figures 1 to 4 the two sand cores -101-, -102- needed for its manufacture, are indicated. Accordingly, it is necessary to carry out mechanizing operations in the area where the different ducts are connected.

Figures 5 and 6, in contrast, show a main body for a thermostatic valve, according to the present invention, having similar features to those of the corresponding prior art shown in figures 1 to 4. Identical or similar elements have been noted with identical numerals, that is why they won't be explained in further detail; instead the explanation will be centered in the distinguishing elements.

As it can be observed in figures 5 and 6, there is a simplification as far as walls and ducts are concerned, with regard to the prior embodiment of the prior art, which allows using one single nucleus or sand core -103-. In this case, the opening -53- connecting the cold water inlet -3- to the housing -5- of the cartridge can be made by means of the core -103-, not being necessary its subsequent mechanizing. In addition, it can also be observed that the zone adjacent to the hot water inlet -4- has been emptied to generate a housing -52-for the distribution part. Furthermore, shoulders -221- , -222- , -223 - , -224-, - 225- for supporting the distribution part have been envisaged, both on the internal wall -11- of the main body -1- and on the wall -22- made using a casting process and, which surrounds the warm water outlet -2-.

Figures 7 to 9 show the thermostatic valve already assembled, with the corresponding thermostatic cartridge -71-, a control -7- for regulating the cartridge, fitting sockets -8-, -9- for connecting the water inlet to the network of the domestic hot water system and the distribution part -6-.

The distribution part is provided with O-rings to ensure the proper adjustment and sealing of the contacts with the shoulders of the housing. The distribution part -6- is cylindrical, and is mechanized, presenting through-holes, which act as hot water ducts -61-, cold water ducts -62- and mixed water ducts - 63-. As a result of its placement, the passage -21- connects the space -23-adjacent to the water outlet -2-, not with the cartridge -71- as in the case of the prior art, but with the distribution part -6-, instead.

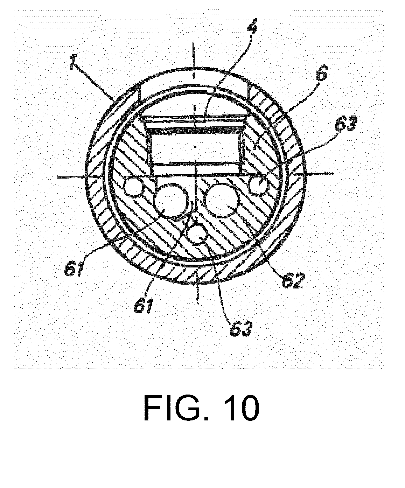

As it can be observed in figure 10, the fitting socket -8- connecting the water inlet -4- also prevents the distribution part -6- from rotating.

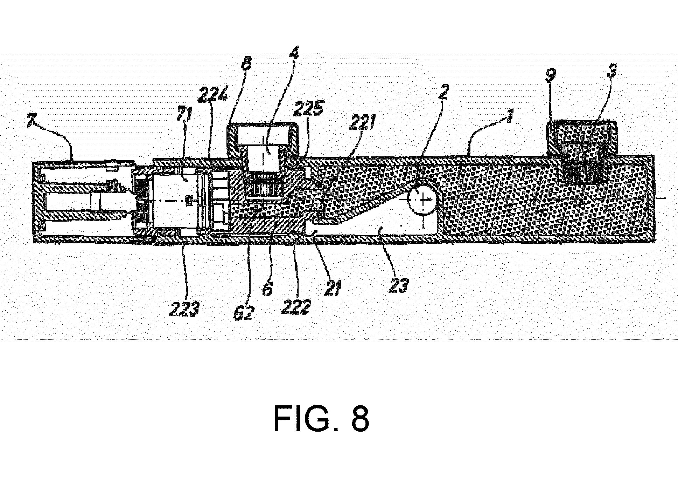

In figure 8 it can be observed in detail the marked path that the cold water follows from the inlet through the cold water valve inlet -3- up to the thermostatic cartridge -71-. It can be appreciated that the morphology of the thermostatic valve allows keeping cold most of the lateral wall -11-, since, as it can be appreciated in figure 8, the cold water inlet travels along a very large stretch inside the main body -1- of the valve.

Keeping cold most of the lateral wall -11- prevents the user from being burnt when touching the body of a tap enclosing the thermostatic valve. Moreover, having a cold surface in a tap allows the water vapor to condensate on said surface, creating a thin film that protects the surface from water splashes. When said splashes fall on hot surfaces where said condensate film is not present, they dry generating lime deposits, which erode the tap enamel or covering when they are washed away.

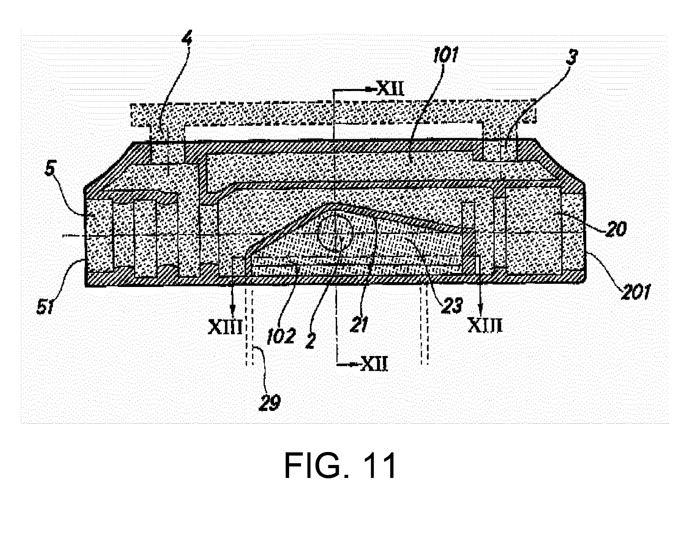

Figures 11 to 13 show a main body -1-, made using a casting process, with its corresponding two sand cores -101-, -102-, according to the prior art, for a thermostatic valve that presents two mixed water outlets (one upper outlet -2-for a shower and a lower outlet to a tray -29-, which causes a waterfall). Identical or similar elements to those of the previous embodiments have been noted with identical numerals and won't be further explained.

It can be observed in figures 11 to 12 that the main body -1- presents both minor opposing sides -51-, -201- open, giving rise to both housings -5-, - 20- for a thermostatic cartridge used for mixing cold and hot water and a distribution cartridge, which diverts the water to the shower outlet -2- or to the tray outlet -29-. In this case, besides being necessary to use two cores, it is also necessary to create an opening -301- in a situation of difficult access, which must be subsequently covered by means of a brass cap or the like.

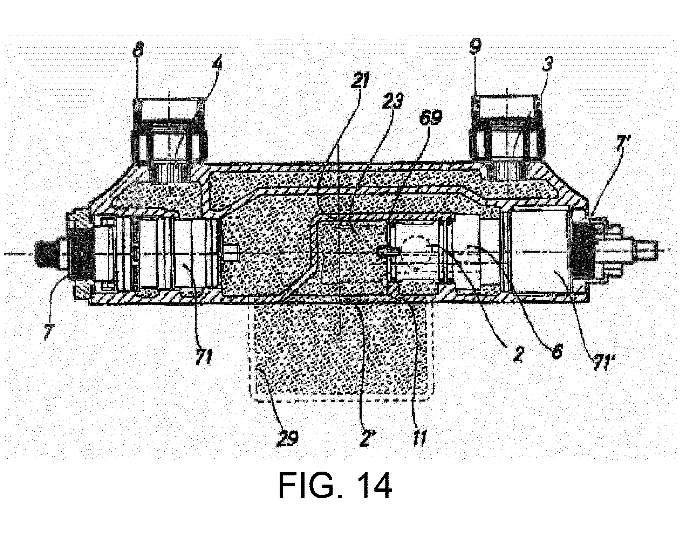

None of this is necessary, on the contrary, to manufacture the thermostatic valve according to the present invention, which is shown in figures 14 a 16. Its manufacture requires one single core and does not require subsequent mechanizing operations or the placement of any cap whatsoever.

Again, the features of the invention are coincident with those of the example provided in figures 5 to 10, again the ducts to be realized during the casting are simplified, which allows using one single core. The ducts leading to the valve are completed by means of the distribution part -6-, which presents through-holes -64-, -65-, -66- leading to the exit - 10 - of the shower outlet -2-or the lower outlet -2'- to the tray -29-. Again, the distribution part is located between the space -23- previous to an outlet and the last cartridge, which in this case is the distribution cartridge -71'-, with its corresponding control -7'-. It can also be observed that in this case, it is also convenient to envisage shoulders for supporting the distribution part -6-, on the wall -21- surrounding the outlets, as well as on the inner face of the lateral -11-, main or external wall of the main body -1-. The distribution part -6- can be very easily positioned, since it enters smoothly through the opening and the space provided for housing the distribution cartridge -71'-. In this case, the use of a fastener -69- has also been envisaged, to prevent the distribution part -6- from rotating.

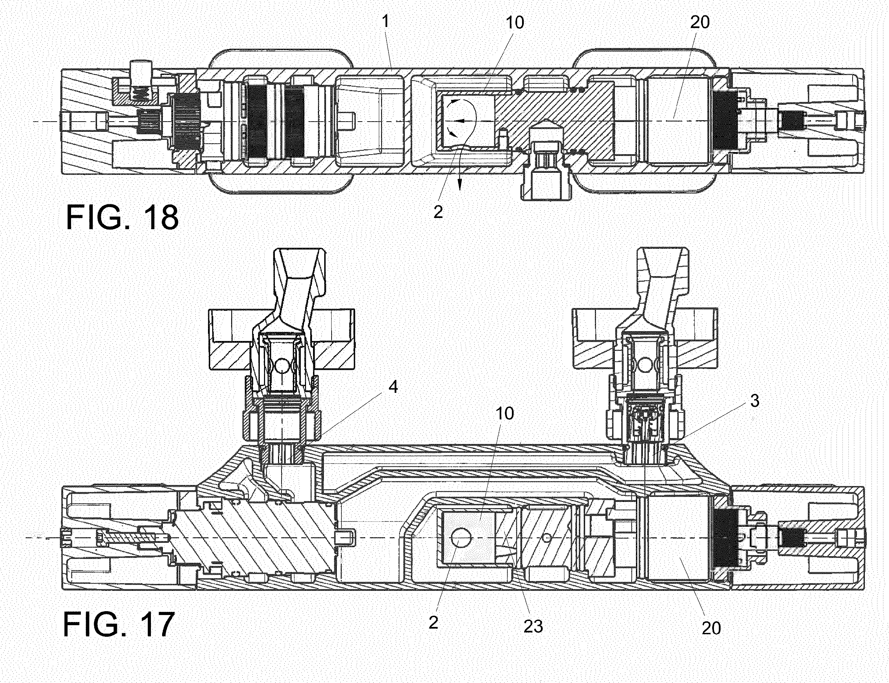

In figures 17 and 18 an embodiment is shown, wherein an exit part -10-is placed, engaging into the space -23- located before the water outlet -2-. With said exit part -10- the features of the space -23- are modified, re-routing the water flux towards its outlet -2- opening.

Said exit part -10- adopts itself to the shape of the space -23-, modifying the features of said space -23-, defining an exit space with a better treatment for the water flow, reducing the water turbulences. This way, when the water exits the distribution part -20-, the exit space -23- is free of turbulences, obtaining a stylized and even water stream without splashes.

It should be appreciated that the mentioned embodiments are only examples, and they do not intend to limit the applicability, configuration or scope of the invention in any way. It is understood that some changes may be made in the functionality and arrangement of the elements described in the exemplary embodiment. The foregoing detailed description will provide those skilled in the art with a convenient road map for implementing an exemplary embodiment of the invention, without departing from the scope of the invention as set forth in the appended claims.

## Claims

1. Thermostatic valve of the type that comprises a main hollow cast body having two water inlets and at least one water outlet, being the main body provided with at least one housing, in which is located a thermostatic and/or by-pass cartridge, and being the main hollow body provided with internal walls that define water ducts from each one of the water inlets to said cartridge, and from the cartridge to said outlet, **characterized in that**, the valve comprises a distribution part:
- housed inside the hollow body,
- located at the exit of said cartridge,
- said part comprising at least one through-hole for conducting the water flowing from the cartridge.

2. Thermostatic valve, according to claim 1, **wherein** the body comprises an internal wall integrally made using a casting process, which surrounds said water outlet(s), being this internal wall provided with at least one shoulder for supporting said distribution part.

3. Valve, according to claim 2, **wherein** the inner face of the internal wall of the main cast body presents shoulders for supporting the distribution part.

4. Valve, according to any of the preceding claims 1 to 3, **wherein** the valve comprises one single thermostatic cartridge and the distribution part comprises through-holes for conducting cold and hot water into the cartridge and to allow the exit of the mixed water coming from the cartridge.

5. Valve, according to claim 4, **wherein** the distribution part is located coincident with one of the water inlets.

6. Valve, according to claim 1 to 3, **wherein** it comprises a distribution cartridge at one end of the main cast body and a thermostatic cartridge located at the opposite end of the main cast body, the internal walls of the main body defining a duct between the exit of the thermostatic cartridge and the distribution cartridge, and the distribution part is located at the exit of the distribution cartridge and comprises two ducts directed to two respective water outlets from the main body.

7. Valve, according to any of the preceding claims 1 to 6, **wherein** the main body is an elongated body being arranged into the housing(s) for the cartridge(s) on the both minor opposite sides of the main body.
